# EUROPÄISCHE PATENTSCHRIFT

(11) **EP 3 599 131 B1**
(45) Veröffentlichungstag und Bekanntmachung des Hinweises auf die Patenterteilung: **04.05.2022**
(21) Anmeldenummer: 19181032.4
(22) Anmeldetag: 18.06.2019
(51) Int. Cl.: B60Q 1/068, B60Q 1/076

(54) **SCHEINWERFER FÜR EIN KRAFTFAHRZEUG**
HEADLAMP FOR A MOTOR VEHICLE
PHARE POUR UN VÉHICULE AUTOMOBILE

(30) Priorität: 26.07.2018 DE 102018212500
(43) Veröffentlichungstag der Anmeldung: 29.01.2020
(73) Patentinhaber: Audi AG, 85045 Ingolstadt (DE)
(72) Erfinder: Hartisch, Michael, 08344 Grünhain-Beierfeld (DE); Leiße, Winfried, 85053 Ingolstadt (DE); Gallant, Meike, 85098 Großmehring (DE)

(56) Entgegenhaltungen:
- DE-A1- 3 931 196
- US-A1- 2003 002 288

## Beschreibung

Die Erfindung betrifft einen Scheinwerfer für ein Kraftfahrzeug, umfassend ein in einem Gehäuse beweglich gelagertes Lichtmodul sowie Stellmittel zum Einstellen der räumlichen Position des Lichtmoduls im Gehäuse.

In Kraftfahrzeugen werden heutzutage Scheinwerfer mit einer dynamischen Leuchtweitenregulierung verbaut, wobei üblicherweise beide Frontscheinwerfer für eine solche Leuchtweitenregulierung entsprechend angesteuert werden können. Ziel dieser Leuchtweitenregulierung ist, dem Kunden bei jeder Fahrsituation das bestmögliche Licht auf der Straße zu geben, also das Fahrzeugvorfeld bestmöglich auszuleuchten. Diese Leuchtweitenregulierung geschieht üblicherweise automatisch unter Verwendung eines entsprechenden Aktuators, über den das Lichtmodul um eine Horizontalachse auf- und abgeschwenkt werden kann. Erforderlich hierfür ist, dass der Scheinwerfer respektive das Lichtmodul in eine definierte Grundeinstellung respektive Grundposition gebracht wird, und zwar sowohl bezogen auf die seitliche Ausrichtung, also die Ausrichtung links-rechts, als auch die Ausrichtung nach oben und unten. Diese Grundeinstellung erfolgt zumeist über Einstellschrauben, die eine horizontale und vertikale Ausrichtung des Scheinwerfers respektive des Lichtmoduls ermöglichen. Diese bei der Montage des Scheinwerfers manuell durchzuführende Grundeinstellung in den beiden Einstellachsen ist mit einem beachtlichen Zeitaufwand verbunden, sei es im Rahmen der Fahrzeugproduktion, sei es im Rahmen von Wartungsarbeiten. Um anstelle einer manuellen Einstellung eine automatische Einstellung vorzusehen, ist aus DE 20 2011 003 404 U1 ein Scheinwerfer bekannt, bei dem diese zweiachsige Verstellung des Lichtmoduls zur Einstellung der horizontalen und vertikalen Grundstellung mittels zweier separater Aktuatoren erfolgt, mit denen das Lichtmodul um die entsprechenden Einstellachsen in die Grundposition verstellt werden kann. Der Einsatz zweier solcher Aktuatoren ist jedoch aufwändig, ferner ist nicht immer ausreichend Bauraum zur Integration zweier solcher Aktuatoren vorhanden.

Weitere Scheinwerfer mit automatischer Einstellung sind aus der DE3931196 A1 und der US2003/002288 A1 bekannt.

Der Erfindung liegt damit das Problem zu Grunde, einen demgegenüber verbesserten Scheinwerfer anzugeben.

Zur Lösung dieses Problems umfasst der erfindungsgemäße Scheinwerfer die Merkmale des Anspruchs 1.

Bei dem erfindungsgemäßen Scheinwerfer kommt für eine Einstellung des Lichtmoduls nur ein Aktuator zum Einsatz, über den es in Verbindung mit einer entsprechenden Stellmechanik möglich ist, die entsprechende Verstellung sowohl um eine vertikale Achse zur Vornahme der links-rechts Ausrichtung wie auch um eine horizontale Achse zur Vornahme der oben-unten Ausrichtung vorzunehmen. Das Lichtmodul selbst ist an einem Träger positionsfest angeordnet, wobei der Träger im Gehäuse beweglich gelagert ist. Er ist sowohl um eine horizontale als auch um eine vertikale Achse verschwenkbar, wobei diese Verschwenkbarkeit beispielsweise über ein Kugelgelenk, mit dem der Träger an einer entsprechenden Haltestruktur angeordnet ist, realisiert sein kann. Der Träger ist nun erfindungsgemäß mit einer entsprechenden Stellmechanik mit dem einen Aktuator gekoppelt, wobei diese Stellmechanik derart ausgelegt ist, dass bei Betrieb des Aktuators eine Verschwenkung des Trägers sowohl um die horizontale als auch um die vertikale Achse möglich ist. Die Stellmechanik ist dabei derart ausgelegt, dass die jeweiligen Verschwenkbewegungen separat erfolgen können, das heißt, dass der Träger entweder um die horizontale Schwenkachse geschwenkt werden kann, um die oben-unten Ausrichtung vorzunehmen, oder um die vertikale Schwenkachse, um die rechts-links Ausrichtung vorzunehmen.

Damit ist es bei dem erfindungsgemäßen Scheinwerfer möglich, unter Verwendung nur eines Aktuators eine automatische Ausrichtung des Lichtmoduls zur Einnahme einer definierten Grundstellung vorzunehmen. Die Ansteuerung des Aktuators erfolgt über eine entsprechende Steuerungseinrichtung, die entweder Teil des Scheinwerfers sein kann, oder mit der der Aktuator respektive Scheinwerfer über eine entsprechende Schnittstelle gekoppelt ist, das heißt, dass die Steuerungseinrichtung kraftfahrzeugseitig vorgesehen ist. In dieser Steuerungseinrichtung werden nach Erreichen der Grundstellungen bevorzugt sowohl in horizontaler als auch vertikaler Richtung die entsprechenden Positionsinformationen in Bezug auf die Ansteuerung des Aktuators, also die eingenommenen Soll-Positionen bei Erreichen der horizontalen Grundeinstellungsposition als auch der vertikalen Grundeinstellungsposition, abgespeichert, da ausgehend von insbesondere der vertikalen Grundeinstellung die Leuchtweitenregulierung im regulären Betrieb erfolgt, im Rahmen welcher der Scheinwerfer respektive das Lichtmodul um die Horizontalachse auf- oder abgeschwenkt wird.

Eine zentrale Baugruppe des erfindungsgemäßen Scheinwerfers ist wie beschrieben die Stellmechanik, die den Aktuator mit dem Träger und damit dem Lichtmodul koppelt, und die derart ausgelegt ist, dass trotz Ansteuerung nur eines Aktuators, der folglich nur eine definierte Bewegung auf die Stellmechanik überträgt, eine separate Verschwenkung des Trägers und damit des Lichtmoduls um die separaten Stellachsen erfolgt. Eine konkrete Ausgestaltung dieser Stellmechanik sieht erfindungsgemäß vor, dass die Stellmechanik ein erstes und ein zweites, jeweils mit dem Träger gekoppeltes bewegbares Stellelement aufweist, wobei der Träger über das erste Stellelement um die horizontale Achse und über das zweite Stellelement um die vertikale Achse verschwenkbar ist und von denen eines über den Aktuator zum Verschwenken um eine Achse bewegbar ist und während der Bewegung temporär mit dem anderen Stellelement zum Verschwenken um die andere Achse in Wirkungsverbindung bringbar ist. Die Stellmechanik umfasst also zwei separate bewegbare Stellelemente, die auch als Stellträger oder Stellrahmen bezeichnet werden können. Beide sind mit dem Träger, an dem das Lichtmodul befestigt ist, gekoppelt, so dass eine Verstellung respektive Bewegung eines solchen Stellelements zwangsläufig auch in einer entsprechenden Verstellung oder Bewegung des Trägers resultiert.

Ein Stellelement ist dazu vorgesehen, den Träger um die Horizontalachse zu verschwenken, ihn also auf- und abzuschwenken, während das andere Stellelement zur Verschwenkung um die Vertikalachse, also zur Rechts-Linksausrichtung, vorgesehen ist. Das die Verschwenkung die Horizontalachse vornehmende erste Stellelement dient bevorzugt gleichzeitig auch dazu, im Rahmen der Leuchtweitenregulierung die Lichtmodulverschwenkung vorzunehmen, weshalb bevorzugt der Aktuator mit dem ersten Stellelement gekoppelt ist.

Die beiden Stellelemente interagieren nur temporär miteinander, sind also nicht fest miteinander verbunden, sondern treten nur temporär miteinander in Wirkungsverbindung. Ist also beispielsweise, wie bevorzugt vorgesehen, der Aktuator mit dem ersten Stellelement gekoppelt, so wird bei dessen Bewegung der Träger und damit das Lichtmodul um die Horizontalachse auf- und abgeschwenkt. Im Rahmen der mit dem ersten Stellelement vornehmbaren Maximalverschiebung oder Maximalbewegung ausgehend von einer Extremposition oder einer Anschlagposition zur anderen Anschlagposition, wenn also der Träger um den maximalen Schwenkwinkel um die Horizontalachse verschwenkt, kommt es zu einer temporären Interaktion des ersten Stellelements mit dem zweiten Stellelement, an dem der Träger ebenfalls befestigt, ist, wobei die Befestigungspunkte des Trägers an der gehäuseseitigen Haltestruktur und am zweiten Stellelement die horizontale Schwenkachse definieren. Im Rahmen dieser Interaktion wird bei fortgesetzter Bewegung des ersten Stellelements das zweite Stellelement mitgenommen, damit aber auch die horizontale Schwenkachse, so dass keine Verstellung mehr um die Schwenkachse erfolgt, wohl aber um die Vertikalachse der Lagerstelle des Trägers an der Haltestruktur, so dass hierüber die entsprechende Links-Rechts-Ausrichtung vorgenommen werden kann. Ist die vertikale Grundposition erreicht, also die Links-Rechts-Grundeinstellung vorgenommen, so kann durch Zurückbewegen des ersten Stellelements einerseits die mechanische Kopplung beider Stellelemente aufgelöst werden, nachdem diese nicht mehr erforderlich ist, und die Grundeinstellung um die Horizontalachse erfolgen. Es ist also durch eine entsprechende geometrische Auslegung der einzelnen Stellelemente sowie deren temporäre mechanische Kopplung eine entsprechende separate Verschwenkung um die beiden Stellachsen möglich.

In weiterer Konkretisierung kann vorgesehen sein, dass der Träger als Rahmen, an oder in dem das Lichtmodul positionsfest fixiert ist, ausgeführt ist, welcher Rahmen im Bereich einer Ecke oder einer Vertikalseite an einer Haltestruktur, die positionsfest in oder am Gehäuse vorgesehen ist, gelagert ist, wobei das erste und das zweite Stellelement an der gegenüberliegenden Seite des Rahmens im Bereich der unteren und der oberen Ecken gelagert ist. Ist beispielsweise der Träger respektive der Rahmen mit seiner - gesehen von vorne - linken oberen Ecke an der Haltestruktur schwenkbar gelagert, so ist das zweite Stellelement ebenfalls an der oberen, rechten Ecke an der gegenüberliegenden Seite gelagert, da wie beschrieben beide Lagerpunkte die horizontale Schwenkachse definieren. Das erste Stellelement hingegen ist an dieser gegenüberliegenden Seite an der unteren rechten Ecke gelagert, so das eine Verschwenkung um diese obere Horizontalachse möglich ist. Das heißt, dass folglich bevorzugt das erste Stellelement im Bereich der der Ecke, an der der Träger gelagert ist, diagonal gegenüber liegenden Ecke gelagert ist, während das zweite Stellelement im Bereich der anderen Ecke im Wesentlichen auf gleicher Höhe wie der Träger gelagert ist. Es sei jedoch festgehalten, dass der Träger und das zweite Stellelement nicht zwingend im Bereich der oberen Ecken befestigt respektive gelagert sein müssen. Vielmehr ist auch denkbar, sie an einer Position entlang der vertikalen Rahmenseiten zu lagern, jedoch wiederum im Wesentlichen auf gleicher Höhe. Es ist lediglich erforderlich, dass die Anbindung des ersten Stell-elements an einer Position, die vertikal versetzt zu der Lagerachse für die Horizontalachse versetzt ist, erfolgt.

Da es bei dem erfindungsgemäßen Scheinwerfer möglich ist, den Träger quasi dreidimensional im Raum zu verschwenken, ist eine Lagerung des Trägers an der Haltestruktur sowie eine Lagerung der Stellelement am Träger über Kugelgelenke besonders zweckmäßig, denkbar sind aber auch Kardangelenke.

Das erste und das zweite Element sind bevorzugt jeweils linear bewegbar, wobei der Aktuator ein Linearaktuator ist. Beide Stellelemente sind demzufolge an entsprechenden Führungseinrichtungen linear beweglich geführt, der Aktuator ist ebenfalls ein Linearmotor, der wie beschrieben auch der Leuchtweitenregulierung dient.

Wie beschrieben wird das erste und das zweite Stellelement bei einer Bewegung des ersten Stellelements beispielsweise ausgehend von einer ersten Anschlagstellung in eine zweite Anschlagstellung, wenn also der maximale Stellweg durchfahren wird, temporär miteinander gekoppelt, so dass das zweite Stellelement durch das sich bewegende erste Stellelement mitgenommen wird. Hierzu weisen das erste und das zweite Stellelement zweckmäßigerweise jeweils einen Mitnehmerabschnitt auf, wobei der Mitnehmerabschnitt des über den Aktuator bewegbaren Stellelements, bevorzugt also das erste Stellelement, währen der Bewegung mit dem Mitnehmerabschnitt des anderen Stellelements, vorzugsweise also des zweiten Stellelements, in lösbare Wirkungsverbindung tritt. Es ist also eine einfache Mitnehmerkopplung vorgesehen, um die entsprechende Verschwenkung um die beiden Achsen vorzunehmen. Dabei kann es bereits ausreichend sein, am über den Aktuator bewegbaren Stellelement nur einen Mitnehmer vorzusehen, ebenso am anderen Stellelement. Dies führt dazu, dass bei einer Bewegung des einen Stellelements über den Aktuator und Mitnahme des anderen Stellelements die Mitnahme nur in der einen Bewegungsrichtung erfolgt, während bei einem Zurückbewegen des Aktuators und damit des gekoppelten Stellelements das mitgenommene Stellelement in seiner Position verbleibt. Dies ist ausreichend, da es ohne weiteres möglich ist, ausgehend von einer Anschlagstellung des über den Aktuator bewegten Stellelements zur Vornahme der Rechts-Links-Ausrichtung die vertikale Grundposition, deren Erreichen messtechnisch erfasst wird, anzufahren und die Aktuatorbewegung dann unmittelbar zu stoppen, wonach das aktiv bewegte Stellelement wieder zurückbewegt wird, um die horizontale Grundposition anzufahren, also die Oben-Unten-Ausrichtung vorzunehmen, was ebenfalls messtechnisch erfasst wird. Dabei kann die Auslegung der Stellelemente respektive die Anordnung der Mitnehmerabschnitte derart sein, dass die Bewegungskopplung erst dann erfolgt, wenn die maximal erforderliche Verschwenkung des Trägers um die Schwenkachse, die über das mit dem Aktuator aktiv bewegbare Stellelement bedienbar ist, erfolgt ist, also um den Schwenkwinkel, der maximal im Rahmen der Leuchtweitenregulierung von Nöten ist. Ist dieser ausgehend von der einen Maximal- oder Endstellung mit Erreichen der anderen Maximal- oder Endstellung durchlaufen, kann die Mitnehmerkopplung erfolgen, so dass dann die Rechts-Links-Ausrichtung erfolgt. Mit Erreichen der Endposition bezogen auf die Rechts-Links-Ausrichtung kann sodann das erste Stellelement über den Aktuator wieder aktiv zurückbewegt werden, um die horizontale Ausrichtung oben-unten innerhalb des maximalen Stellwinkelbereichs, wie für die Leuchtweitenregulierung erforderlich, vorzunehmen.

Alternativ ist es aber auch denkbar, an einem der beiden Stellelemente auch zwei Mitnehmerabschnitte vorzusehen, zwischen die der eine Mitnehmerabschnitt des anderen Stellelements eingreift. Dies ermöglicht es, im Bedarfsfall, wenn beispielsweise die vertikale Grundeinstellungsposition versehentlich überfahren wurde, die Anordnung in die entgegengesetzte Richtung wieder zurückzustellen, mithin also den Träger wieder zurückzuziehen, wozu dann der zweite Mitnehmerabschnitt temporär in Wirkungsverbindung tritt.

Zweckmäßig ist es in jedem Fall, wenn Arretiermittel vorgesehen sind, um die Stellmechanik dann zu arretieren, wenn die Verschwenkung des Trägers um die Vertikalachse mit Erreichen der Grundstellungsposition beendet ist, das heißt, dass über die Arretiermittel dann die weitere Verschwenkung um die vertikale Achse gesperrt ist. Bevorzugt kann ein solches Arretiermittel ein Rastmittel sein, über das die Verschwenkstellung des die Verschwenkung um die Vertikalachse erwirkenden Stellelements automatisch arretiert ist. Das heißt, dass mit Beendigung der Rechts-Links-Stellbewegung automatisch eine Rastarretierung erfolgt. Hierzu kann das Rastmittel eine Rastschiene, längs welcher das Stellelement bewegbar ist, umfassen, wie auch einen am Stellelement vorgesehenen Rastabschnitt, der mit der Rastschiene zusammenwirkt, so dass automatisch mit Erreichen der Grundposition die Rastarretierung gegeben ist. Alternativ ist es auch denkbar, dass das Arretiermittel ein manuell zu setzendes Arretiermittel, beispielsweise in Form eines Arretierstifts, ist, das von einem Monteur, der die Scheinwerfereinstellung im Rahmen der Montage oder Wartung vornimmt, zu setzen ist. Dieses Arretierelement ist beispielsweise in eine entsprechende Arretierbohrung am Stellelement einzuschieben, so dass eine entsprechende Weiterbewegung gesperrt ist oder Ähnliches.

Wie beschrieben erfolgt die Vornahme der Einstellung durch Ansteuerung des Aktuators unter Verwendung einer entsprechenden Steuerungseinrichtung, die zusätzlich zum Erfassen von Positionsinformationen zum Träger und/oder zum ersten und/oder zweiten Stellelement vorgesehen ist. Dies ist erforderlich, um exakte Positionsinformationen für die relevanten Positionen im Rahmen des Einstellbetriebs zu erfassen, so dass eine exakte Positionsauflösung möglich ist, um die Ansteuerung der Grundeinstellung, aber auch der späteren Leuchtweitenregulierung vorzunehmen.

Neben dem Scheinwerfer selbst betrifft die Erfindung ferner ein Kraftfahrzeug, umfassend wenigstens einen Scheinwerfer der vorstehend beschriebenen Art.

Schließlich betrifft die Erfindung ein Verfahren zum Einstellen eines Scheinwerfers, der vorstehenden beschriebenen Art, verbaut in einem Kraftfahrzeug, bei welchem Verfahren das erste Stellelement bei in einer um die vertikale Achse in eine Endposition verschwenktem Träger aus dieser definierten Endposition über den Aktuator bewegt wird, bis durch Interaktion des ersten Stellelements mit dem zweiten Stellelement der Träger um die vertikale Achse in eine erste Sollposition verschwenkt ist, in welcher das zweite Stellelement arretiert wird, wonach das erste Stellelement über den Aktuator unter Verschwenkung um die horizontale Achse zurück bewegt wird, bis der Träger eine zweite Sollposition erreicht hat, wobei die Positionsinformationen des Trägers und/oder des ersten und/oder des zweiten Stellelements zu den beiden Sollpositionen gespeichert werden.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines erfindungsgemäßen Scheinwerfers in einer Perspektivansicht, wobei hier nur die relevanten Scheinwerferkomponenten zur Ermöglichung der Ausrichtung in die Grundeinstellung sowie zur Leuchtweitenregulierung gezeigt sind,
- Fig. 2: die Anordnung aus Fig. 1 in einer Seitenansicht,
- Fig. 3: die Anordnung aus Fig. 1 in einer um die Horizontalachse verschwenkten Extrem- oder Anschlagstellung als Ausgangsposition vor der Vornahme der Grundeinstellung,
- Fig. 4: die entsprechende Seitenansicht,
- Fig. 5: die Anordnung aus Fig. 3 nach Durchführung der maximalen, insbesondere im Rahmen der Leuchtweitenregulierung erforderlichen Verschwenkung um die Horizontalachse und Kopplung der Mitnehmer der Stellelemente,
- Fig. 6: die entsprechende Seitenansicht hierzu,
- Fig. 7: die Anordnung aus Fig. 5 mit um die Vertikalachse in die Sollposition erfolgter Verschwenkung des Trägers des Lichtmoduls,
- Fig. 8: die entsprechende Seitenansicht,
- Fig. 9: die Rückstellung des Trägers um die Horizontalachse zur Einnahme der zweiten Sollposition bezüglich der Horizontalausrichtung und damit das in der Grundeinstellung befindliche ausgerichtete Lichtmodul,
- Fig. 10: die Anordnung aus Fig. 9 in einer Seitenansicht,
- Fig. 11: die Anordnung aus Fig. 10 mit nach unten verschwenktem Lichtmodul zur Darstellung des maximalen Schwenkbereichs im Rahmen der Leuchtweitenregulierung,
- Fig. 12: die entsprechende Seitenansicht, und
- Fig. 13: ein Diagramm zur Darstellung der Bewegungswege.

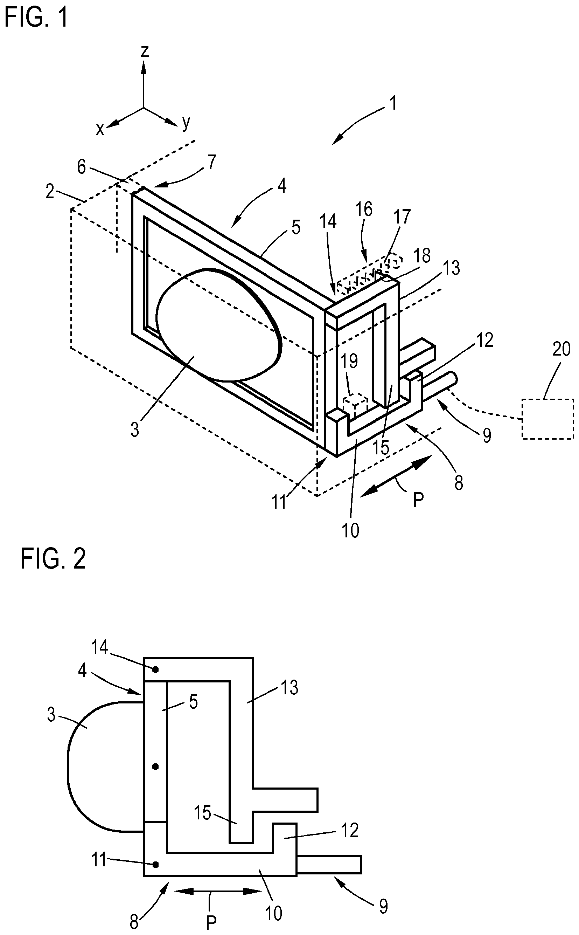

Fig. 1 zeigt einen erfindungsgemäßen Scheinwerfer 1 in Form einer reinen Prinzipdarstellung. Gestrichelt angedeutet ist ein Gehäuse 2 des Scheinwerfers, in dem ein hier ebenfalls nur prinzipiell dargestelltes Lichtmodul 3 aufgenommen ist. Das Lichtmodul 3 ist positionsfest an einem Träger 4 in Form eines Rahmens 5 verbaut. Der Rahmen 5 ist an einer Haltestruktur 6, die positionsfest am Gehäuse 2 angeordnet ist, um eine erste Gelenkverbindung 7, vorzugsweise ein Kugelgelenk, beweglich gelagert, so dass eine Verschwenkung um eine Horizontalachse y wie auch um eine Vertikalachse z möglich ist.

Vorgesehen ist des Weiteren eine Stellmechanik 8 sowie ein Aktuator 9, über den die Stellmechanik 8 bewegt werden kann, wobei über diese Stellmechanik 8 der Träger 4 respektive der Rahmen 5 im Raum verstellt werden kann, indem er in definierten Bewegungen um die horizontale Achse y und die vertikale Achse z verschwenkt werden kann.

Die Stellmechanik 8 weist ein erstes Stellelement 10 auf, das mit dem Aktuator 9, einem Linearaktuator respektive einem Linearmotor, gekoppelt ist. Das erste Stellelement 10 ist linear beweglich, kann also, wie durch den Doppelpfeil P dargestellt, linear verschoben werden. Es ist mit dem Träger 4 respektive mit dem Rahmen 5 ebenfalls über eine Gelenkverbindung 11, bevorzugt wiederum ein Kugelgelenk, gelenkig verbunden, wobei die Gelenkverbindung 11 im Bereich der diagonal gegenüberliegenden Ecke des Rahmens 5 bezogen auf die Ecke, an der die Gelenkverbindung 7 vorgesehen ist, angeordnet ist.

Am ersten Stellelement 10 ist ein erster Mitnehmerabschnitt 12 vorgesehen, der der mechanischen Kopplung zu einem zweiten Stellelement 13 dient, das ebenfalls Teil der Gelenkmechanik 8 ist. Das zweite Stellelement 13 ist über eine weitere Gelenkverbindung 14, vorzugsweise ebenfalls ein Kugelgelenk, am Rahmen 5 befestigt, und zwar im Bereich der rechten oberen Ecke auf gleicher Ebene respektive in der gleichen Horizontalebene wie die Gelenkverbindung 7, so dass die Gelenkverbindung 14 folglich in der Horizontalachse y verläuft respektive diese definiert. Das heißt, dass der Rahmen 5 um die zwischen den Gelenkverbindungen 7 und 14 definierte Horizontalachse y verschwenkt werden kann, was durch Bewegung des ersten Stellelements 10 erfolgt, wie nachfolgend beschrieben wird.

Am zweien Stellelement 13 ist ein zweiter Mitnehmervorsprung 15 vorgesehen, der quasi in das U-förmige erste Stellelement 10 eingreift und ersichtlich im linearen Bewegungsweg des ersten Mitnehmerabschnitts 12 liegt. Die Mitnehmerabschnitte 12, 15 gehen eine temporäre mechanische Kopplung im Rahmen der Verstellbewegung ein, worauf nachfolgend noch eingegangen wird.

Weiterhin ist, hier ebenfalls nur gestrichelt gezeigt, ein Arretiermittel 16, hier exemplarisch in Form einer Rastschiene 17 gezeigt, die mit einem Rastelement 18, was am zweiten Stellelement 13 vorgesehen ist, zusammenwirkt, um, worauf nachfolgend noch eingegangen wird, eine entsprechende Einstellposition des zweiten Stellelements 13 arretieren zu können.

Weiterhin ist, ebenfalls nur gestrichelt angedeutet, ein weiterer Mitnehmerabschnitt 19 am ersten Stellelement 10 gezeigt, der optional ist, und der dazu dienen kann, das zweite Stellelement 13 bei Bedarf auch wieder zurückzubewegen, sollte die Sollposition im Rahmen der seitlichen Grundeinstellung, also Rechts-Links-Einstellung, versehentlich überfahren worden sein.

Fig. 2 zeigt in einer Seitenansicht die Anordnung aus Fig. 1, die für die nachfolgende Beschreibung als Ausgangsposition oder Ausgangslage angesehen wird. Es sei angenommen, dass in dieser Position der Träger 4 respektive Rahmen 5 quasi in einer Extremstellung ist, das heißt, dass er maximal um die Horizontalachse y verschwenkt ist, und bezogen auf die Vertikalachse z in einer Mittenposition ist beziehungsweise, bezogen auf die jeweiligen maximalen Schwenkwinkel, in der Extremposition um die z-Achse und einer Nullstellung um die y-Achse positioniert ist. Dies entspricht z. B. dem Anlieferungszustand des Scheinwerfers am Montageband.

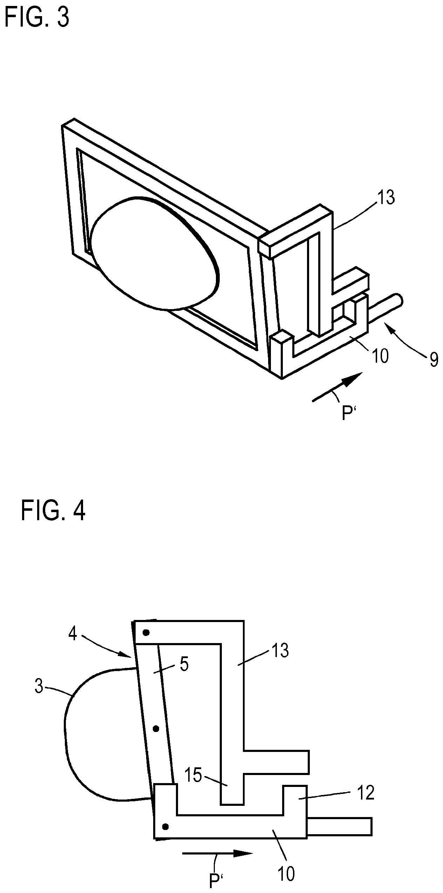

Zur Durchführung der einmalig im Rahmen der Montage oder eines Scheinwerferaustausch vorzunehmenden Grundeinstellungspositionierung wird nun der Aktuator 9, also der Linearmotor über die in Fig. 1 ebenfalls nur gestrichelt gezeigte Steuerungseinrichtung 20, die Teil des Scheinwerfers 1 sein kann, aber auch Teil des Kraftfahrzeugs, entsprechend angesteuert, so dass das erste Stellelement 10 in Richtung des Pfeils P' bewegt wird, das heißt, dass die beiden Mitnehmerabschnitte 12, 15 voneinander wegbewegt werden, wie Fig. 3 und 4 zeigen. Da nur das erste Stellelement 10, nicht aber das zweite Stellelement 13 bewegt wird, bleibt folglich die y-Achse in ihrer räumlichen Position, es erfolgt lediglich eine Verschwenkung des Trägers 4 respektive des Rahmens 5 um die y-Achse. Dies führt dazu, dass das Lichtmodul 3 nach unten verschwenkt wird, wie die Figuren 3 und insbesondere 4 deutlich zeigen. Es sei angenommen, dass eine Verschwenkung ausgehend von der Nullstellung gemäß Fig. 1 um 5° nach unten erfolgt. In dieser Position sei angenommen, dass eine Extrem- oder Anschlagposition in Bezug auf den maximalen Schwenkweg um die Horizontalachse y eingenommen ist. Die eingenommenen Positions- oder Steuerdaten werden gegebenenfalls seitens der Steuerungseinrichtung 20 erfasst und gespeichert. Die Ausrichtung des Rahmens 5 um die Vertikalachse z hat sich durch diese Stellbewegung nicht geändert, das heißt, dass sich der Rahmen 5 und damit auch das zweite Stellelement 13 nach wie vor in der einen seitlichen Anschlagposition, also in einer maximalen seitlichen Verschwenkstellung um die Vertikalachse z befindet.

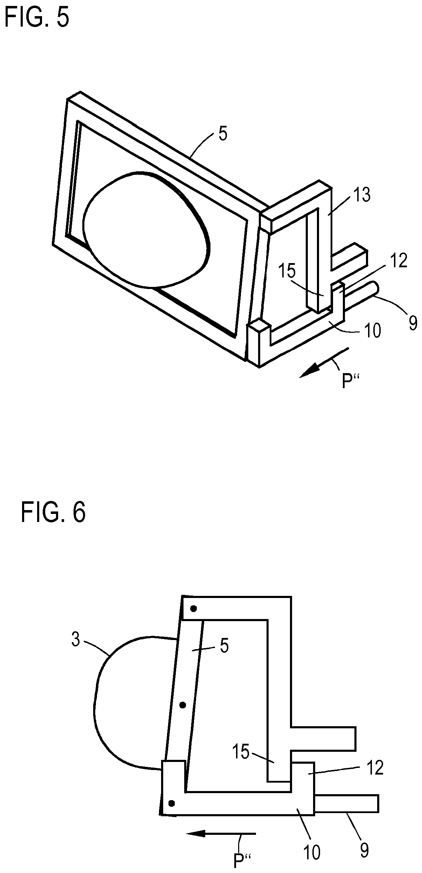

Im nächsten Schritt, siehe die Figuren 5 und 6, wird das erste Stellelement 10 über den Aktuator 9 wieder in die entgegengesetzte Richtung, wie durch den Pfeil P" dargestellt, bewegt. Hierbei kommt es, wie insbesondere Fig. 6 deutlich zeigt, zu einem erneuten Verschwenken des Rahmens 5 um die horizontale y-Achse, das heißt, dass das Lichtmodul 3 nach oben geschwenkt wird. Während dieser Verstellbewegung bleibt zumindest bis zu dem Zeitpunkt, zu dem der erste Mitnehmerabschnitt 12 gegen den zweiten Mitnehmerabschnitt 15 läuft, die y-Achse positionsfest, es erfolgt lediglich eine Verschwenkung des Trägers 5 um die y-Achse, beispielsweise in diesem Fall um 5° nach oben, das heißt, dass der maximale Verschwenkwinkel oben-unten, der auch im Rahmen der Lichweitenregulierung durchlaufen werden kann, insgesamt 10° beträgt.

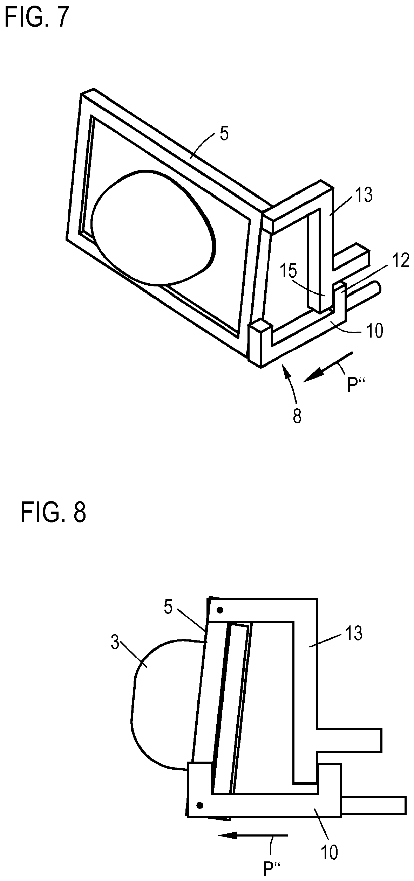

Wie Fig. 6 zeigt, berühren während der Linearbewegung des ersten Stellelements 10 entlang seiner nicht näher gezeigten Linearführung in Richtung des Pfeils P" die beiden Mitnehmerabschnitte 12 und 15 einander. Wird diese Bewegung fortgesetzt, wie die Figuren 7 und 8 zeigen, so wird infolge dieser mechanischen Mitnehmerkopplung auch das zweite Stellelement 13 bewegt, es wird entlang seiner ebenfalls nicht näher gezeigten Linearführung verschoben. Hierbei kommt es zu einer Verschwenkung des Rahmens 5 um die vertikale z-Achse, nachdem nunmehr die gesamte Gelenkmechanik 8 linear verschoben wird und auch die y-Achse hierüber quasi mitgenommen wird und um die z-Achse verschwenkt wird. Die eingenommene Schwenkstellung um die horizontale y-Achse bleibt während dieser fortgesetzten Bewegung unverändert, da sich wie beschrieben die y-Achse mit im Raum bewegt. Es erfolgt also ab dem Zeitpunkt der Mitnehmerkopplung die Seiteneinstellung durch Verschwenken um die vertikale z-Achse ausgehend von der vormals eingenommenen Extrem- oder Anschlagposition in Bezug auf diesen maximalen Verschwenkwinkel um die z-Achse.

Diese Bewegung wird solange durchgeführt, bis die messtechnisch erfasste Sollposition in Bezug auf die Seiteneinstellung, also Rechts-Links-Einstellung, erreicht ist. Es sei angenommen, dass diese Sollposition nach einem Verschwenkwinkel um die z-Achse von 5° erreicht ist. In dieser Position ist ersichtlich der Träger 5 und damit das Lichtmodul 3 nicht nur um die y-Achse, sondern auch um die z-Achse verschwenkt, wie Fig. 8 anschaulich zeigt. Die eingenommene Position wird gegebenenfalls mit entsprechenden Positionsdaten seitens der Steuerungseinrichtung 20 wiederum erfasst. Der Einstellvorgang zur Rechts-Links-Seitenausrichtung ist damit abgeschlossen.

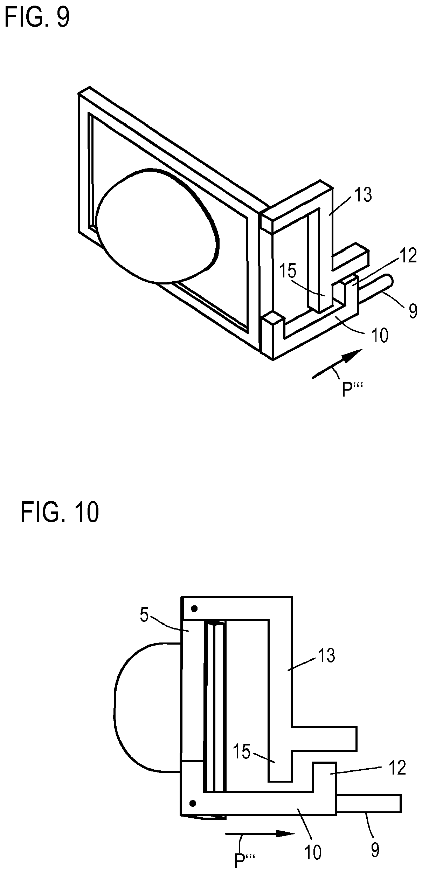

Wie beschrieben befindet sich der Träger 5 in Bezug auf die Verschwenkung um die horizontale y-Achse wiederum in einer Extrem- oder Anschlagposition, das heißt, er ist maximal nach oben verschwenkt. Nachdem die Seitenausrichtung um die z-Achse erfolgt ist, muss im nächsten Schritt die Ausrichtung um die y-Achse, also die Oben-Unten-Ausrichtung erfolgen. Hierzu wird, siehe die Figuren 9 und 10, das erste Stellelement 10 über den Aktuator 9 wieder in die entgegengesetzte Richtung, wie durch den Pfeil P'" gezeigt ist, wieder zurückbewegt, das heißt, dass die beiden Mitnehmerabschnitte 12, 15 wieder voneinander getrennt werden. Die beiden Stellelemente 10 und 13 werden folglich voneinander gekoppelt. Die Position des zweiten Stellelements 13 ist jedoch fixiert, nachdem in der gemäß der Figuren 7, 8 eingenommenen Sollposition die Positionsarretierung über das Arretiermittel 16 erfolgt ist. Das heißt, dass die Seitenausrichtung nicht mehr geändert wird.

Die Bewegung des ersten Stellelements 10 in Richtung des Pfeils P'" führt zu einem erneuten Verschwenken des Rahmens 5 nach unten, wobei diese Schwenkbewegung solange erfolgt, bis auch bezüglich der y-Achse und damit der Oben-Unten-Ausrichtung die messtechnisch erfasste Sollposition erreicht ist. Es sei angenommen, dass diese beispielsweise bei 0° erreicht ist, wie in den Figuren 9 und 10 gezeigt ist. Diese Sollposition wird ebenfalls seitens der Steuerungseinrichtung 20 erfasst und gespeichert und als Ausgangsposition für eine erforderliche Leuchtweitenregulierung verwendet. Das heißt, dass ausgehend aus dieser Sollposition heraus im Falle einer entsprechend zu verändernden Vorfeldausleuchtung der Rahmen 5 samt Lichtmodul 3 über den Aktuator 9 durch Verschieben des ersten Stellelements 10 geringfügig auf- oder abgeschwenkt wird, je nach erforderlicher Regulierungsweise.

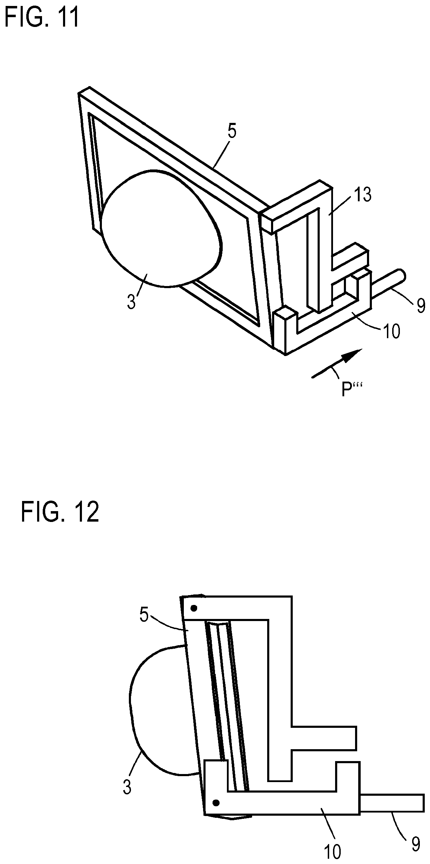

Die Figuren 11 und 12 zeigen schließlich die Anordnung aus Fig. 9, 10, bei der das erste Stellelement 10 über den Aktuator 9 noch weiter in Richtung des Pfeils P‴ bewegt wurde, das heißt, dass das Lichtmodul 3 und der Träger 5 noch weiter nach unten geschwenkt wurden, um den maximalen Verschwenkweg im Rahmen der Leuchtweitenregulierung darzustellen. Dieser beträgt exemplarisch 10°, und wird über den maximalen Bewegungsweg des ersten Stellelements 10 zwischen der in den Figuren 11 und 12 gezeigten einen Extremstellung und der in den Figuren 5 und 6 gezeigten Extremstellung, in der die beiden Anschlagelemente 12 und 15 aneinander anliegen definiert ist.

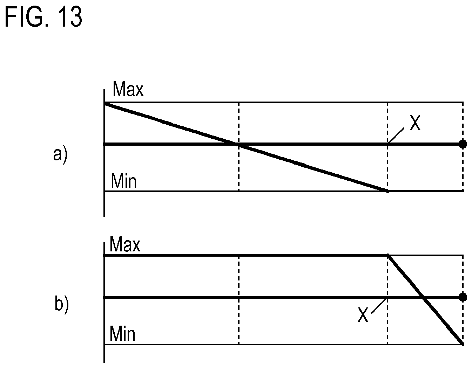

Figur 13 zeigt schließlich ein Diagramm in Bezug auf die Einstellwege. Längs der Abszisse ist in den beiden Diagrammen a und b jeweils der Verfahrweg des Aktuators 9 dargestellt, längs der Ordinate im Falle des Diagramms a die vertikale Position der Hell-Dunkel-Grenze des Lichtmoduls 3, also die Verschwenkung des Lichtmoduls 3 um die y-Achse, und im Diagramm b die horizontale Position der Hell-Dunkel-Grenze, also die Seitenausrichtung und damit die Verschwenkung um die z-Achse.

Mit Min. und Max. in Bezug auf die Abszisse ist jeweils der maximale Aktuatorweg angegeben, bei Min. befindet sich der Aktuator in der Position gemäß Fig. 3/4, bei Max. in der Position, in der er den maximalen Bewegungsweg durchlaufen hat. In Bezug auf die Ordinate bedeutet im Diagramm a die Bezeichnung Min. und Max. die jeweilige Extremposition, einmal vollständig nach unten geschwenkt, einmal vollständig nach oben geschwenkt. In Bezug auf das Diagramm b bedeutet in Bezug auf die Ordinate die Bezeichnungen Min. und Max. die jeweiligen Extrempositionen, also die Verschwenkung maximal zur rechten und zur linken Seite.

Ausgehend von einem Verfahrweg des Aktuators aus der Min-Stellung findet, siehe Diagramm a, ein Verschwenken des Rahmens 5 und damit des Lichtmoduls 3 ausschließlich um die Horizontalachse statt, das heißt, dass die Hell-Dunkel-Grenze von unten nach oben wandert. Dies gilt solange, bis an der Position x die beiden Mitnehmerabschnitte 12 und 15 koppeln. Bis zu diesem Zeitpunkt verblieb die horizontale Position der Hell-Dunkel-Grenze, also die Seitenausrichtung des Rahmens 5, unangetastet, sie befand sich in der einen Extremposition, war also beispielsweise vollkommen nach rechts verschwenkt. Mit der Kopplung zum Zeitpunkt beziehungsweise zur Verfahrwegsposition x setzt dann aber die Verschwenkung um die z-Achse ein, während gleichzeitig die Verschwenkung um die y-Achse beendet ist. Der Rahmen 5 ist von der einen Extremposition in die andere Extremposition um die y-Achse verschwenkt, in dieser verbleibt er während der restlichen Aktuatorbewegung. Während dieser findet lediglich eine Verschwenkung um die vertikale z-Achse von der einen in die andere Maximalposition statt.

Wie Fig. 13 zeigt, findet die Verstellung um die z-Achse nur in ca. einem Viertel des maximalen Aktuatorverfahrweges statt. Das heißt, dass dreiviertel des maximalen Aktuatorweges für die Vornahme der Leuchtweitenregulierung zur Verfügung stehen.

## Patentansprüche

1. Scheinwerfer für ein Kraftfahrzeug, umfassend ein in einem Gehäuse (2) beweglich gelagertes Lichtmodul (3) sowie Stellmittel zum Einstellen der räumlichen Position des Lichtmoduls (3) im Gehäuse (2), wobei das Lichtmodul (3) an einem um eine horizontale und eine vertikale Achse (y, z) verschwenkbaren Träger (4) angeordnet ist, welcher Träger (4) mit dem Stellmittel umfassend eine Stellmechanik (8) und einen die Stellmechanik (8) bewegenden Aktuator (9) gekoppelt ist, wobei die Stellmechanik (8) derart ausgebildet ist, dass bei Betrieb des Aktuators (9) eine separate Verschwenkung des Trägers (4) sowohl um die horizontale als auch um die vertikale Achse (y, z) erfolgt, **dadurch gekennzeichnet, dass** die Stellmechanik (8) ein erstes und ein zweites, jeweils mit dem Träger (4) gekoppeltes bewegbares Stellelement (10, 13) aufweist, wobei der Träger (4) über das erste Stellelement (10) um die horizontale Achse (y) und über das zweite Stellelement (13) um die vertikale Achse (z) verschwenkbar ist und von denen das erste Stellelement (10) über den Aktuator (9) zum Verschwenken um eine Achse (y) bewegbar ist und während der Bewegung temporär mit dem zweiten Stellelement (13) zum Verschwenken um die andere Achse (z) in Wirkungsverbindung bringbar ist.

2. Scheinwerfer nach Anspruch 1, **dadurch gekennzeichnet, dass** der Aktuator (9) mit dem ersten, die Verschwenkung um die horizontal Achse (y) erwirkenden Stellelement (10) gekoppelt ist.

3. Scheinwerfer nach Anspruch 1 oder 2, **dadurch gekennzeichnet, dass** der Träger (4) als Rahmen (5), an oder in dem das Lichtmodul (3) positionsfest fixiert ist, ausgeführt ist, welcher Rahmen (5) im Bereich einer Ecke oder einer Vertikalseite an einer Haltestruktur (6) gelagert ist, und dass das erste und das zweite Stellelement (10, 13) an der gegenüberliegenden Seite des Rahmens (5) im Bereich der unteren und oberen Ecken gelagert sind.

4. Scheinwerfer nach Anspruch 3, **dadurch gekennzeichnet, dass** das erste Stellelement (10) im Bereich der der Ecke, an der der Träger (5) gelagert ist, diagonal gegenüber liegenden Ecke gelagert ist, während das zweite Stellelement (13) im Bereich der anderen Ecke im wesentlichen auf gleicher Höhe wie der Träger (4) gelagert ist.

5. Scheinwerfer nach einem der vorangehenden Ansprüche, **dadurch gekennzeichnet, dass** der Träger (4) an einer Haltestruktur (6) und die Stellelemente (10, 13) am Träger (4) über Kugelgelenke oder Kardangelenke gelagert sind.

6. Scheinwerfer nach einem der vorangehenden Ansprüche, **dadurch gekennzeichnet, dass** das erste und das zweite Stellelement (10, 13) jeweils linear bewegbar gelagert ist und der Aktuator (9) ein Linearaktuator ist.

7. Scheinwerfer nach einem der vorangehenden Ansprüche, **dadurch gekennzeichnet, dass** der Aktuator (9) gleichzeitig als Aktuator (9) für eine Leuchtweitenregelung, im Rahmen welcher der Träger (4) um die horizontale Achse (y) verschwenkt wird, dient.

8. Scheinwerfer nach einem der vorangehenden Ansprüche, **dadurch gekennzeichnet, dass** das erste und das zweite Stellelement (10, 13) jeweils einen Mitnehmerabschnitt (12, 15) aufweisen, wobei der Mitnehmerabschnitt (12) des über den Aktuator (9) bewegbaren Stellelements (10) während der Bewegung mit dem Mitnehmerabschnitt (15) des anderen Stellelements (13) in lösbare Wirkungsverbindung tritt.

9. Scheinwerfer nach Anspruch 8, **dadurch gekennzeichnet, dass** am ersten oder am zweiten Stellelement (10, 13) zwei Mitnehmerabschnitte (12, 19) vorgesehen sind, wobei bei einer Bewegung des mit dem Aktuator (9) gekoppelten Stellelements (10) in eine erste Richtung der eine Mitnehmerabschnitt (12) mit dem Mitnehmerabschnitt (15) des anderen Stellelements (13) in Wirkungsverbindung tritt, und bei einer Bewegung in die entgegengesetzte Richtung der andere Mitnehmerabschnitt (19) mit dem Mitnehmerabschnitt (15) es anderen Stellelements (13) in Wirkungsverbindung tritt.

10. Scheinwerfer nach einem der vorangehenden Ansprüche, **dadurch gekennzeichnet, dass** Arretiermittel (16) zum Arretieren der Stellmechanik (8) derart, dass die Verschwenkung des Trägers (8) um die vertikale Achse (z) gesperrt ist, vorgesehen sind.

11. Scheinwerfer nach Anspruch 10, **dadurch gekennzeichnet, dass** das Arretiermittel (16) ein Rastmittel ist, über das die Verschwenkungstellung des die Verschwenkung um die vertikale Achse (z) erwirkende Stellelements (13) automatisch arretiert.

12. Scheinwerfer nach Anspruch 11, **dadurch gekennzeichnet, dass** das Rastmittel (16) eine Rastschiene (17), längs welcher das Stellelement (13) bewegbar ist, und einen am Stellelement (13) vorgesehenen Rastabschnitt (18), der mit der Rastschiene (17) zusammenwirkt, umfasst.

13. Scheinwerfer nach Anspruch 10, **dadurch gekennzeichnet, dass** das Arretiermittel (16) ein manuell zu setzendes Arretierelement ist.

14. Scheinwerfer nach einem der vorangehenden Ansprüche, umfassend eine Steuerungseinrichtung (20) zum Ansteuern des Aktuators (9) und zum Erfassen von Positionsinformationen zum Träger (4) und/oder zum ersten und/oder zweiten Stellelement (10, 13).

15. Kraftfahrzeug, umfassend wenigstens einen Scheinwerfer (1) nach einem der vorangehenden Ansprüche.

16. Verfahren zum Einstellen eines Scheinwerfers nach einem der Ansprüche 1 bis 14, verbaut in einem Kraftfahrzeugs, bei welchem Verfahren das erste Stellelement (10) bei in einer um die vertikale Achse (z) in eine Endposition verschwenktem Träger (4) über den Aktuator (9) bewegt wird, bis durch Interaktion des ersten Stellelements (10) mit dem zweiten Stellelement (13) der Träger (4) um die vertikale Achse (z) in eine erste Sollposition verschwenkt ist, in welcher das zweite Stellelement (13) arretiert wird, wonach das erste Stellelement (10) über den Aktuator (9) unter Verschwenkung um die horizontale Achse (y) zurück bewegt wird, bis der Träger (4) eine zweite Sollposition erreicht hat, wobei die Positionsinformationen des Trägers (4) und/oder des ersten und/oder der zweiten Stellelements (10, 13) zu den beiden Sollpositionen in einer Steuerungseinrichtung (20) gespeichert werden.

## Claims

1. Headlamp for a motor vehicle, comprising a light module (3) movably mounted in a housing (2) and adjusting means for adjusting the spatial position of the light module (3) in the housing (2), wherein the light module (3) is arranged on a beam (4) which is pivotable about a horizontal and a vertical axis (y, z), which beam (4) is coupled to the adjusting means comprising an adjusting mechanism (8) and an actuator (9) moving the adjusting mechanism (8), wherein the adjusting mechanism (8) is designed in such a way that during operation of the actuator (9) separate pivoting of the beam (4) takes place both about the horizontal and about the vertical axis (y, z), **characterised in that** the adjusting mechanism (8) has a first and a second movable adjusting element (10, 13) which are each coupled to the beam (4), wherein the beam (4) is pivotable about the horizontal axis (y) via the first adjusting element (10) and about the vertical axis (z) via the second adjusting element (13) and of which the first adjusting element (10) is movable via the actuator (9) to pivot about one axis (y) and during the movement can be brought temporarily into operative connection with the second adjusting element (13) to pivot about the other axis (z).

2. Headlamp according to claim 1, **characterised in that** the actuator (9) is coupled to the first adjusting element (10), which causes the pivoting about the horizontal axis (y).

3. Headlamp according to claim 1 or 2, **characterised in that** the beam (4) is designed as a frame (5) on or in which the light module (3) is fixed in position, which frame (5) is mounted on a holding structure (6) in the region of a corner or a vertical side, and **in that** the first and second adjusting elements (10, 13) are mounted on the opposite side of the frame (5) in the region of the lower and upper corners.

4. Headlamp according to claim 3, **characterised in that** the first adjusting element (10) is mounted in the region of the corner diagonally opposite the corner at which the beam (5) is mounted, while the second adjusting element (13) is mounted in the region of the other corner substantially at the same height as the beam (4).

5. Headlamp according to any of the preceding claims, **characterised in that** the beam (4) is mounted on a holding structure (6) and the adjusting elements (10, 13) are mounted on the beam (4) by means of ball joints or cardan joints.

6. Headlamp according to any of the preceding claims, **characterised in that** the first and second adjusting elements (10, 13) are each mounted so as to be linearly movable and the actuator (9) is a linear actuator.

7. Headlamp according to any of the preceding claims, **characterised in that** the actuator (9) also acts as an actuator (9) for headlight range control, within the scope of which the beam (4) is pivoted about the horizontal axis (y).

8. Headlamp according to any of the preceding claims, **characterised in that** the first and second adjusting elements (10, 13) each have a catch section (12, 15), wherein the catch section (12) of the adjusting element (10) which is movable via the actuator (9) enters into releasable operative connection with the catch section (15) of the other adjusting element (13) during the movement.

9. Headlamp according to claim 8, **characterised in that** two catch sections (12, 19) are provided on the first or on the second adjusting element (10, 13), wherein, when the adjusting element (10) coupled to the actuator (9) moves in a first direction, one catch section (12) becomes operatively connected to the catch section (15) of the other adjusting element (13), and in the event of a movement in the opposite direction, the other catch section (19) becomes operatively connected to the catch section (15) of the other adjusting element (13).

10. Headlamp according to any of the preceding claims, **characterised in that** locking means (16) are provided for locking the adjusting mechanism (8) in such a way that the pivoting of the beam (8) about the vertical axis (z) is blocked.

11. Headlamp according to claim 10, **characterised in that** the locking means (16) is a latching means via which the pivoted position of the adjusting element (13) causing the pivoting about the vertical axis (z) is automatically locked.

12. Headlamp according to claim 11, **characterised in that** the latching means (16) comprises a latching rail (17) along which the adjusting element (13) is movable, and a latching section (18) which is provided on the adjusting element (13) and cooperates with the latching rail (17).

13. Headlamp according to claim 10, **characterised in that** the locking means (16) is a locking element to be set manually.

14. Headlamp according to any of the preceding claims, comprising a control apparatus (20) for controlling the actuator (9) and for detecting position information regarding the beam (4) and/or the first and/or second adjusting element (10, 13).

15. Motor vehicle comprising at least one headlamp (1) according to any of the preceding claims.

16. Method for adjusting a headlamp according to any of claims 1 to 14 which is installed in a motor vehicle, in which method the first adjusting element (10) is moved via the actuator (9) when the beam (4) is pivoted about the vertical axis (z) into an end position until, through interaction of the first adjusting element (10) with the second adjusting element (13), the beam (4) is pivoted about the vertical axis (z) into a first desired position, in which the second adjusting element (13) is locked, after which the first adjusting element (10) is moved back via the actuator (9) by pivoting about the horizontal axis (y) until the beam (4) has reached a second desired position, wherein the position information of the beam (4) and/or of the first and/or of the second adjusting element (10, 13) in relation to the two desired positions is stored in a control apparatus (20).

## Revendications

1. Phare pour un véhicule automobile, comprenant un module d'éclairage (3) logé de manière mobile dans un boîtier (2) ainsi qu'un moyen de réglage pour régler la position spatiale du module d'éclairage (3) dans le boîtier (2), dans lequel le module d'éclairage (3) est agencé sur un support (4) pouvant pivoter autour d'un axe horizontal et d'un axe vertical (y, z), lequel support (4) est couplé avec le moyen de réglage comprenant un mécanisme de réglage (8) et un actionneur (9) déplaçant le mécanisme de réglage (8), dans lequel le mécanisme de réglage (8) est réalisé de sorte que, lors du fonctionnement de l'actionneur (9), il se produit un pivotement séparé du support (4) aussi bien autour de l'axe horizontal qu'autour de l'axe vertical (y, z), **caractérisé en ce que** le mécanisme de réglage (8) présente un premier et un second éléments de réglage (10, 13) mobiles, couplés respectivement avec le support (4), dans lequel le support (4) peut pivoter autour de l'axe horizontal (y) par l'intermédiaire du premier élément de réglage (10) et autour de l'axe vertical (z) par l'intermédiaire du second élément de réglage (13), et parmi lesquels le premier élément de réglage (10) peut être déplacé par l'intermédiaire de l'actionneur (9) pour pivoter autour d'un axe (y) et peut être amené temporairement en liaison active avec le second élément de réglage (13) pendant le mouvement pour pivoter autour de l'autre axe (z).

2. Phare selon la revendication 1, **caractérisé en ce que** l'actionneur (9) est couplé au premier élément de réglage (10) provoquant le pivotement autour de l'axe horizontal (y).

3. Phare selon la revendication 1 ou 2, **caractérisé en ce que** le support (4) est conçu comme un cadre (5) sur ou dans lequel le module d'éclairage (3) est fixé en position fixe, lequel cadre (5) est monté sur une structure de maintien (6) dans la zone d'un coin ou d'un côté vertical, et **en ce que** le premier et le second élément de réglage (10, 13) sont montés sur le côté opposé du cadre (5) dans la zone des coins inférieur et supérieur.

4. Phare selon la revendication 3, **caractérisé en ce que** le premier élément de réglage (10) est monté dans la zone du coin diagonalement opposé au coin sur lequel est monté le support (5), pendant que le second élément de réglage (13) est monté dans la zone de l'autre coin sensiblement à la même hauteur que le support (4).

5. Phare selon l'une quelconque des revendications précédentes, **caractérisé en ce que** le support (4) est monté sur une structure de maintien (6) et les éléments de réglage (10, 13) sont montés sur le support (4) par l'intermédiaire de joints à rotule ou de joints de cardan.

6. Phare selon l'une quelconque des revendications précédentes, **caractérisé en ce que** le premier et le second éléments de réglage (10, 13) sont respectivement montés de manière à pouvoir se déplacer linéairement et l'actionneur (9) est un actionneur linéaire.

7. Phare selon l'une quelconque des revendications précédentes, **caractérisé en ce que** l'actionneur (9) sert en même temps d'actionneur (9) pour une régulation de portée lumineuse, dans le cadre de laquelle le support (4) est soumis à un pivotement autour de l'axe horizontal (y).

8. Phare selon l'une quelconque des revendications précédentes, **caractérisé en ce que** le premier et le second éléments de réglage (10, 13) présentent respectivement une section d'entraînement (12, 15), dans lequel la section d'entraînement (12) de l'élément de réglage (10) mobile par l'intermédiaire de l'actionneur (9) entre en liaison active détachable avec la section d'entraînement (15) de l'autre élément de réglage (13) pendant le mouvement.

9. Phare selon la revendication 8, **caractérisé en ce que** deux sections d'entraînement (12, 19) sont prévues sur le premier ou sur le second élément de réglage (10, 13), dans lequel, lors d'un mouvement de l'élément de réglage (10) couplé à l'actionneur (9) dans une première direction, l'une section d'entraînement (12) entre en liaison d'action avec la section d'entraînement (15) de l'autre élément de réglage (13), et lors d'un mouvement dans la direction opposée, l'autre section d'entraînement (19) entre en liaison d'action avec la section d'entraînement (15) de l'autre élément de réglage (13).

10. Phare selon l'une quelconque des revendications précédentes, **caractérisé en ce que** des moyens de blocage (16) sont prévus pour bloquer le mécanisme de réglage (8) de manière à bloquer le pivotement du support (8) autour de l'axe vertical (z).

11. Phare selon la revendication 10, **caractérisé en ce que** le moyen de blocage (16) est un moyen d'encliquetage par lequel la position de pivotement de l'élément de réglage (13) provoquant le pivotement autour de l'axe vertical (z) est automatiquement bloquée.

12. Phare selon la revendication 11, **caractérisé en ce que** le moyen d'encliquetage (16) comprend un rail d'encliquetage (17) le long duquel l'élément de réglage (13) est mobile, et une section d'encliquetage (18) prévue sur l'élément de réglage (13) qui interagit avec le rail d'encliquetage (17).

13. Phare selon la revendication 10, **caractérisé en ce que** le moyen de blocage (16) est un élément de blocage à réglage manuel.

14. Phare selon l'une quelconque des revendications précédentes, comprenant un appareil de commande (20) pour commander l'actionneur (9) et pour détecter des informations de position par rapport au support (4) et/ou au premier et/ou au second élément de réglage (10, 13).

15. Véhicule automobile comprenant au moins un phare (1) selon l'une quelconque des revendications précédentes.

16. Procédé de réglage d'un phare selon l'une quelconque des revendications 1 à 14, monté dans un véhicule automobile, procédé dans lequel le premier élément de réglage (10) est déplacé par l'intermédiaire de l'actionneur (9) lorsque le support (4) est pivoté autour de l'axe vertical (z) dans une position finale, jusqu'à ce que le support (4) soit soumis à un pivotement autour de l'axe vertical (z) dans une première position de consigne par interaction du premier élément de réglage (10) avec le second élément de réglage (13), dans laquelle le second élément de réglage (13) est bloqué, après quoi le premier élément de réglage (10) est déplacé en arrière par l'actionneur (9) en pivotant autour de l'axe horizontal (y), jusqu'à ce que le support (4) ait atteint une seconde position de consigne, dans lequel les informations de position du support (4) et/ou du premier et/ou du second élément de réglage (10, 13) concernant les deux positions de consigne sont mémorisées dans un appareil de commande (20).
